# NEW EUROPEAN PATENT SPECIFICATION

(11) **EP 0 600 425 B2**
(45) Date of publication and mention of the opposition decision: **21.03.2012**
(45) Mention of the grant of the patent: 08.03.2000
(21) Application number: 93119235.5
(22) Date of filing: 29.11.1993
(51) Int. Cl.: B32B 27/32, C08J 5/18, B65D 65/40

(54) **Heat shrinkable films containing single site catalyzed copolymers having long chain branching**
Heisschrumpfbare Folien enthaltend 'single site' katalysierte Copolymere mit langkettigen Verzweigungen
Films thermorétractables comprenant des copolymères ayant des ramifications longues, catalysé par un catalyseur de type "site unique"

(30) Priority: 20.09.1993 US 124179
(43) Date of publication of application: 08.06.1994
(73) Proprietor: Cryovac, Inc., Duncan, SC 29334-0464 (US)
(72) Inventor: Babrowicz, Robert, Spartanburg, SC 29302 (US); Childress, Blaine C., Lyman, SC 29365 (US); Ahlgren, Kelly R., Greenville, SC 29615 (US); Shah, Gautem P., Simpsonville, SC 29681 (US)
(74) Representative: Franck, Peter

(56) References cited:
- EP-A- 0 416 815
- EP-A- 0 452 920
- EP-A- 0 495 099
- EP-A2- 0 597 502
- WO-A-92/14784
- WO-A-93/08221
- WO-A1-94/09060
- WO-A1-95/00333
- GB-A- 2 206 890
- US-A- 3 900 635
- US-A- 5 059 481
- US-A- 5 132 074
- MODERN PLASTICS INTERNATIONAL vol. 23, no. 8 , August 1993 , LAUSANNE CH pages 40 - 41 DON SCHWANK 'Single-site metallocene catalysts yield tailor-made polyolefin resins'

## Description

### Field of the Invention

The present invention is generally directed to heat shrinkable films containing single site catalyzed copolymers which include at least some long chain branching.

### Background of the Invention

Shrinkable thermoplastic films have found many useful applications in packaging of meats, cheeses, poultry and numerous other food and non-food products. There is always the search for improvement in these films to make them have better impact resistance, improved optics and improved shrinkability. For example, in U.S. Patent No. 4,640,856 to Ferguson et al., the multilayer thermoplastic heat shrinkable film was described having improved shrink toughness and barrier properties. The film included at least one layer of a very low density polyethylene and a gas barrier layer of vinylidene chloride copolymer or ethylene vinyl alcohol. The film was found to be particularly useful for making bags for packaging large cats of fresh red meat.

U.S. Patent Nos. 5,059,481, 4,976,898 and 4,863,769, all to Lustig et al., discloses heat shrinkable film suitable for packaging food articles such as frozen poultry, primal meat cuts and processed meat products wherein the film may be a biaxially stretched monolayer film of a very low density polyethylene copolymer or a multilayer film containing very low density polyethylene.

U.S. Patent No. 4,457,960 to Newsome discloses the use of linear low density polyethylene in multiple layer molecularly oriented films.

Each of the foregoing patents describe the incorporation into heat shrinkable films of conventional ethylene/alpha-olefins produced by Ziegler-Natta catalyst systems. Ziegler-Natta catalytic methods are commonly used throughout the polymer industry and have a long history tracing back to about 1957.

These systems are often referred to as heterogeneous since they are composed of many types of catalytic species each at different metal oxidation states and different coordination environments with ligands. Examples of Ziegler-Natta heterogeneous systems include metal halides activated by an organometallic co-catalyst such as titanium or magnesium chlorides complexed to trialkyl aluminum and may be found in patents such as U.S. Patents 4,302,565 and 4,302,566. Because these systems contain more than one catalytic species, they possess polymerization sites with different activities and varying abilities to incorporate comonomer into a polymer chain.

The result of such multi-site chemistry is a product with poor control of the polymer chain architecture both within the sequence of a single chain, as well as when compared to a neighboring chain. In addition, differences in catalyst efficiency produce high molecular weight polymer at some sites and low molecular weight at others. Therefore, copolymers produced using these systems lead to polymer products which are mixtures of chains some high in comonomer and others with almost none. For example, conventional Ziegler-Natta multi-site catalysts may yield a linear ethylene/alpha-olefin copolymer (HDPE, LLDPE, VLDPE, ULDPE) having a mean comonomer percentage of 10, but with a range of 0% to 40% comonomer in individual chains. This, together with the diversity of chain lengths results in a truly heterogeneous mixture also having a broad molecular weight distribution (MWD).

Linear low density polyethylene (LLDPE) has enjoyed great success as a raw material choice for packaging films. The term LLDPE is generally understood to describe copolymers of ethylene and one or more other alpha olefin monomers which are polymerized at low pressure using a Ziegler-Natta catalyst to achieve a density range of about 0.915 to about 0.940. Although no clear standard exists, LLDPE polymers are often marketed in subgroups of densities such as linear medium density (LMDPE), linear low density polyethylene, linear very low density (VLDPE), or linear ulna low density polyethylene (ULDPE). These classifications are for marketing use and will vary by supplier.

These materials are different from high pressure low density polyethylene (LDPE) which is generally understood in the trade as a highly branched homopolymer having a single low melting point. For Example, a 0.92 density LDPE would typically have a molting point at about 112°C while a corresponding density LLDPE would have melting points at 107°, 120°, and 125°C. The multiple melting points are commonly observed with LLDPE and are a consequence of the above mentioned heterogeneous incorporation of comonomer.

Recently a new type of ethylene copolymer has been introduced which is the result of a new catalyst technology. Examples of introductory journal articles include "Exxon Cites 'Breakthrough' in Olefins Polymerization," Modern Plastics. July 1991, p.61; "Polyolefins Gain Higher Performance from New Catalyst Technologies." Modern Plastics, Oct. 1991, p.46; "PW Technology Watch," Plastics World, Nov. 1991, p. 29; and '." Plastics Technology, Nov 1991, p. 15.

Such new resins are produced using metallocene catalyst systems, the uniqueness of which resides in the steric and electronic equivalence of each catalyst position. Metallocene catalysts are characterized as having a single, stable chemical type rather than a volatile mixture of states as discussed for conventional Ziegler-Natta. This results in a system composed of catalyst positions which have a singular activity and selectivity. For this reason, metallocene catalyst systems are often referred to as "single site" owing to the homogeneous nature of them, and polymers and copolymers produced from them are often referred to as single site resins by their suppliers.

Generally speaking, metallocene catalysts are organometallic compounds containing one or more cyclopentadienyl ligands attached to metals such as hafnium, titanium, vanadium, or zirconium. A co-catalyst, such as but not limited to, oligomeric methyl alumoxane is often used to promote the catalytic activity. By varying the metal component and the cyclopentadienyl ligand a diversity of polymer products may be tailored having molecular weights ranging from about 200 to greater than 1,000,000 and molecular weight distributions from 1.5 to about 15. The choice of co-catalyst influences the efficiency and thus the production rate, yield, and cost. Examples of metallocene catalysts are disclosed in U.S. Patent Nos. 4,701,432, 4,306,041, 5,088.228. 4,935,397, 5,084,534, 3,161,629, 5,055,438, 5,057,475, and in JP 63/175004 and JP 1,101,315.

As a consequence of the single site system afforded by metallocenes, ethytene/alpha-olefin copolymer resins can be produced with each polymer chain having virtually the same architecture. Therefore, the copolymer chains produced from single site systems are uniform not only in chain length, but also in average comonomer content, and even regularity of comonomer spacing, or incorporation along the chain.

In contrast to the above mentioned Ziegler-Natta polymers, these single site metallocene polymers are characterized as having a narrow MWD and narrow compositional distribution (CD). While conventional polymers have MWD's of about 3.5 to 8.0, metallocenes range in MWD from about 1.5 to about 25 and most typically about 2.0. MWD refers to the breadth of the distribution of molecular weights of the polymer chains, and is a value which is obtained by dividing the number-average molecular weight into the weight-average molecular weight. The low CD, or regularity of side branches chains along a single chain and its parity in the distribution and length of all other chains, greatly reduces the low MW and high MW "tails". These features reduce the extractables which arise from poor LOW control as well as improve the optics by removing the linear, ethylene-rich portions which are present in conventional heterogeneous resins.

Thus, conventional Ziegler-Natta systems produce heterogeneous resins which reflect the differential character of their multiple catalyst sites while metallocene systems yield homogeneous resins which, in turn, reflect the character of their single catalytic site.

Another distinguishing property of single site catalyzed ethylene copolymers is manifested in their melting point range. The narrow CD of metallocenes produces a narrow melting point range as well as a lower Differential Scanning Calorimeter (DSC) peak melting point peak Unlike conventional resins which retain a high melting point over a wide density range, metallocene resin melting point is directly related to density. For example, an ethylene/butene copolymer having a density of 0.905 g/cc produced using a metallocene catalyst has a peak melting point of about 100°C, while a slightly lower density ethylene/butene copolymer which was made using a conventional Ziegler catalyst reflects its heterogeneous nature with a melting point at about 120°C. DSC shows that the Ziegler resin is associated with a much wider melting point range and actually melts higher despite its lower density.

It should be noted that at least some previously available ethylene based linear polymers approximated the physical and compositional properties achieved by the present metallocene catalyzed polyolefins. For example, in "Sequence and Branching Distribution of Ethylene/1-Butene Copolymers Prepared with a Soluble Vanadium Based Ziegler-Natta Catalyst," Macromolecules, 1992, 25, 2820 - 2827, it was confirmed that a soluble vanadium based Ziegler-Natta catalytic system VOCl₃/Al₂(C₂H₅)₃Cl₃, acts essentially as a single site catalyst although VOCl₃ is not a metallocene. Homogeneous copolymers produced by such a catalyst system have been commercially available for several years. An example of such are the resins sold under the tradename Tafmer(TM) by Mitsui.

U.S. Patent No. 4,501,634 to Yoshimura et al is directed to an oriented, multilayered film which includes a Tafmer as a blend component in at least one layer.

Japanese Kokoku 37907/83 to Gunze Limited was directed to a heat-sealable biaxially oriented composite film wherein the heat seal layer contains Tafmer in a blend.

The foregoing patents disclose homogeneous ethylene alpha-olerins having densities below 0.90 g/cc. Heretofore, such resins have been generally unavailable in densities at and above 0.90 g/cc because of limitations in the VOCl₃ process. Yet, U.S. Patent 1,209,825 to DuPont discloses homogeneous copolymers having densities up to about 0.920 made with single site Zigler catatysts. When extruded into a film the resins exhibit improved physical and optical properties as compared to films of heterogeneous copolymers. However, such homogeneous copolymers of densities above 0.90 g/cc have been commercially unavailable, It is believed that process limitations precluded the manufacture of such resins in any but bench-top quantities. Metallocene catalysts, however, can provide such homogeneous copolymers in a wide range of densities in commercial quantities. Thus, the benefits of homogeneity can now be incorporated into copolymers having densities analogous to those of conventional VLDPEs and LLDPEs.

However, while providing improved physical properties such as optics, low extractables and improved impact, the narrow compositional distribution of some typical metallocene catalyzed resins can cause some processing difficulties. It has been found that such processing problems are avoided if some limited long chain branching is introduced. That is, a typical metallocene catalyzed ethylene alpha-olefin may be thought of as a collection of linear chains, each of substantially identical length, each having approximately the same number of short chain (comonomer) branches distributed at regular intervals along that length. Splicing an abbreviated linear chain with the same regular comonomer distribution onto each of the linear chains, or at least some of the chains in the collection, yields an ethylene alpha-olefin with essentially all of the physical properties of the original copolymer, but with an improved "body" or melt strength for improved processability including improved extrudability, orientation speeds and susceptibility to irradiation.

One way of quantifying the improved processability of the new homogeneous branched ethylene alpha-olefin copolymers is by the melt flow ratio I₁₀/I₂ as described in ASTM D-1238. In WO 93/08221 Dow discloses such copolymers and notes that the I₁₀/I₂ ratio for such is indicative of the degree of long chain branching. For linear polyclefins the I₁₀/I₂ ratio increases as molecular weight distribution increases. Molecular weight distribution may be defined as the ratio of weight average molecular weight (Mw) to number average molecular weight (Mn) or Mw/Mn. Conventional heterogeneous linear ethylene alpha-olefins typically have a high I_{10/}I₁₂ and a correspondingly high molecular weight distribution. Linear homogeneous ethylene alpha-olefins have a low molecular weight distribution and a correspondingly low I₁₀/I₂. But homogeneous ethylene alpha-olefins with long chain branching such as those supplied by Dow under the Insite trade name have low molecular weight distributions but high I₁₀/I₂ ratios. In part, Dow defines these copolymers as having I₁₀/I₂ ≥ 5.63 and Mw/Mn ≤ (I₁₀/I₂)- 4.63. This high I₁₀/I₂ is an indication of ease of processab3ity discussed above, while the homogeneity, of which Mw/Mn is one measure, provides for improved physical properties also discussed above. A more detailed description of the chemistry and particularly the rheology of these branched homogeneous copolymers is given in WO 93/08221 which is incorporated herein by reference.

Dow in EP 416,815 disclosed the preparation of ethylene/olefin copolymers using monocyclopentadienylsilane complexed to a transition metal. The homogeneous ethylene copolymers which may be prepared using the catalyst are said to have better optical properties than typical ethylene polymers and be well suited for film or injection molding.

EXXON discloses in WO-A-92/14784 metallocene catalyzed ethytene/alpha-olefin copolymers which are stated to be useful for making films having various desirable attributes, however, does not disclose any heat-shrinkabte films nor any homogeneous ethylene/alpha-olefin copolymers having long chain branching.

Subject-matter of EP-A-0 495 099 (Mitsui Petrochemical) is an olefin copolymer produced with a bis-cyclopentadienyl metallocene catalyst which can be used for forming into articles such as films and specifically for the preparation of inflation films.

Dow discloses in EP-A-0 416 815 a homogeneous ethylene/alpha-olefin copolymer produced using a monodentate metallocene catalyst, which copolymer is stated to be useful for the manufacture of films by blow-molding techniques without making reference to heat-shrinkable films.

EP-A-0 452 920 (Mitsui Petrochemical) discloses a process for the preparation of an ethylene copolymer and an olefin polymer using a multidentate metallocene catalyst and does not make reference to a homogeneous ethylene/apha-olefin copolymer having long chain branching nor to heat-shrinkable films.

Sbject-matter of GB-A-2 206 890 (Grace) is a heat-shrinkable film produced from a heterogeneous ethylene/alpha-olefin copolymer.

US-A-5,132,074 (Isozaki) discloses a process for the manufacture of a heat-shrinkable film using ethylene/alpha-olefin copolymers. However, there is no mentioning of homogeneous resins having long chain branching.

WO-A-94/09060 discloses substantially linear ethylene interpolymers, preferably copolymers of ethylene and an alpha-olefin with three to twenty carbon atoms, the preferred alpha-olefin being 1-octene, which have a melt flow ratio I₁₀/I₂ ≥ 5.63 and a molecular weight distribution , M_{w}/Mₙ, defined by the equation M_{w}/Mₙ ≥ (I10/I2)-4.63. The density of the copolymers ranges more preferably from 0.88 g/cm³ to 0.92 g/cm³. WO-A-94/09060 discloses multilayer films, but does not disclose a multilayer film having at least two core layers comprising the substantially linear ethylene interpolymer.

US-A-4 837 084 discloses heat-shrinkable, multilayer films combining orientation-, shrink-, and abuse-resistant properties. US-A-4 837 084 exemplifies 4-layer films which provide excellent values for these properties, and in which an interior layer and an outside layer comprise a very low density linear polyethylene (VLDPE), commercialized by Dow Chemical as Dow XU61512.08L. US-A-4 837 084 specifies that this VLDPE has octene as comonomer, a density of 0.905 and a melt index of 0.80. US-A-4 837 084 does not disclose a multilayer film having at least two core layers comprising VLDPE.

US-A-4 820 557 discloses heat-shrinkable multilayer films having excellent abuse resistance, good shrinkability characteristics and good orientation processing characteristics. US-A-4 820 557 exemplifies a 4-layer, film with improved properties, in which an interior layer comprises very low density linear polyethylene (VLDPE), commercialized by Dow as XPR0545-37904-4H with a melt index of 0.8, a density of 0.905 and octene as comonomer. US-A-4 820 557 does not disclose a multilayer film having at least two core layers comprising VLDPE.

Several documents disclose the use in films of homogeneous single site catalyzed copolymers of ethylene and 1-octene with long chain branching and with densities within the range of 0.89 g/cc to 0.91 g/cc, which polymers combine improved processability with improved strength and toughness. Examples of such documents are: WO-A-93/08221 already mentioned above; Plastic Focus, 13 September 1993, 25 (18); G.D. Schwank, "Selected Applications for Constrained Geometry Catalyst Technology (CGCT) Polymers", SPO '92, 23 September 1992, pages 1-22; K.W. Swogger, "The Material Properties of Polymers made from Constrained Geometry Catalysts", 22 Septemper 1992; and "Dow Claim Big Advantage in New Polyolefin Catalysts", Chemical Marketing Reporter, 5 October 1992, pages 3 and 20.

As will be shown below, it has been found that resins produced by the Dow process exhibit improved physical properties characteristic of single site catalyzed resins but also possess a processability similar to that of conventional Ziegler-Natta copolymers. It is believed that the Dow metallocene resins possess the limited long chain branching discussed above.

It is thus an object of the present invention to provide a film structure having improved physical properties, such as improved optics and impact strength and low extractables and specifically a heat-shrinkable, impact-resistant multi-layer film suitable for packaging.

It is a further object of the present invention to provide a film which is readily extruded and processes.

### Summary of the Invention

These as well as other objects are achieved by providing a heat-shrinkable, impact-resistant multi-layer film comprising at least two core layers, each of said core layers comprising a homogeneous single site catalyzed copolymer of ethylene and an alpha-olefin having four to ten carbon atoms and having long chain branching, said copolymer having a density of from about 0.89 g/cc to about 0.91 g/cc, which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

### Detailed Description of Preferred Embodiments

The present invention is directed to a heat-shrinkable, impact-resistant multilayer film comprising at least two core layers, each of said core layers comprising a homogeneous single site catalyzed copolymer of ethylene and an alpha-olefin having four to ten carbon atoms and having long chain branching, said copolymer having a density of from about 0.89 g/cc to about 0.91 g/cc, which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

The term "copolymer" as used herein is intended to denote polymers of two or more comonomers. Therefore, although the present specification generally discusses ethylene alpha-olefin copolymers such term is intended to encompass copolymers of ethylene with one or more alpha-olefins or ethylene with an alpha-olefin and another comonomer.

The term "oriented" is used herein interchangeably with the term "heat shrinkable," these terms designating a material which has been stretched and set by cooling while substantially retaining its stretched dimensions. An oriented (i.e. heat shrinkable) material will tend to return to its original unstretched (unextended) dimensions when heated to an appropriate elevated temperature.

The film of the present invention is preferably and is formed by extrusion processes especially art-known coextrusion methods. It is initially cooled to a solid state by, for example, cascading water or chilled air quenching, after which it is reheated to within its orientation temperature range and oriented by stretching. The stretching to orient may be accomplished in many ways such as, for example, by "blown bubble" techniques or "tenter framing." These processes are well known to those skilled in the art and refer to orientation procedures whereby the material is heated to its softening temperature and then stretched in the cross or transverse direction (TD) and in the longitudinal or machine direction (MD). After being heated and stretched, the film is quickly quenched while substantially retaining its stretched dimensions to cool the film rapidly and thus set or lock in the oriented molecular configuration.

The film layers may be formed by coextrusion, with additional layers thereafter being extrusion coated thereon to form multilayer films. Two multilayer tubes may also be formed with one of the tubes thereafter being extrusion coated or laminated onto the other. The extrusion coating method of film formation is preferable to coextruding the entire film when it is desired to subject one or more layers of the film to a treatment which may be harmful to one or more of the other layers. This may be done where it is desired to irradiate one or more layers of a film with high energy electrons where the film contains a barrier layer of one or more copolymers of vinylidene chloride (e.g., Saran(TM)), such as vinylidene chloride and vinyl chloride or vinylidene chloride and methyl acrylate as well as vinylidene chloride with ethyl acrylate or acrylonitrile.

Films of this type would, for example, comprise those where the barrier layer is a Saran(TM) layer in addition to or instead of an EVOH layer. Those skilled in the art generally recognize that irradiation with high energy electrons is generally harmful to such Saran(TM) barrier layer compositions, as irradiation may degrade and discolor Saran(TM). making it turn brown. Thus, if full coextrusion followed by high energy electron irradiation of the multilayer structure is carried out on a film having a barrier layer containing a Saran(TM) layer, the irradiation should be conducted at low levels and with care. Alternatively, this may be avoided by extruding a first layer or layers, subjecting the layer or layers to high energy electron irradiation and thereafter applying the Saran(TM) barrier layer and, for that matter, other layers (which may or may not have been irradiated) sequentially onto the outer surface of the extruded, previously irradiated, tube. This sequence allows for high energy electron irradiation of the first layer or layers without subjecting the Saran(TM) barrier layer to harmful discoloration.

Thus, as used herein the term "extrusion" or the term "extruding" is intended to include coextrusion, extrusion coating, or combinations thereof.

As noted, the present heat shrinkable film may optionally be subjected to an energetic radiation treatment, including, but not limited to corona discharge, plasma, flame, ultraviolet, and high energy electron treatment. Irradiation is most preferably performed prior to orientation and, in the case of a Saran-containing barrier structure, prior to ecrusion coating of the barrier component. Radiation dosages are referred to herein in terms of the radiation unit "RAD," with one million RADS or a megarad being designated as "MR." A suitable radiation dosage of high energy electrons is in the range of up to about 12 MR, more preferably about 2 to about 9 MR. However, irradiation after orientation, regardless of structure, and performed at lower dosage levels, is also within the scope of the present invention.

In the present heat shrinkable multilayer film, each layer will generally serve some function or provide some characteristic to the overall structure. Seal layer composition will be chosen for ease of heat sealing and, depending on the intended end use application, other factors such as grease resistance may be of importance. Outer layer composition may be chosen for abuse resistance or, where a given end use application requires a folded over "lap" seal, sealability to the seal layer. If a barrier layer is required it will be chosen for the degree of gas or moisture impermeability needed for the ultimate product to be packaged. Further internal layers may serve to add bulk to the film, promote shrinkability, promote interlayer adhesion or any combination of these properties.

For purposes of the present invention it has been found that the use of homogeneous ethylene alpha-olefin copolymers with long chain branching in at least one core layer of a multilayer heat-shrinkabte film provides improved impact properties and excellent shrink properties. More particularly, for a gas barrier material which includes a core layer of a polymeric material having gas barrier properties such as a vinylidene chloride copolymer or an ethylene vinyl alcohol copolymer, it has been found that further internal layers of such homogeneous, branched ethylene alpha-ole4in copolymers sandwiching the barrier layer provide for a machinable barrier film with improved impact resistance and free shrink That is, it is within the scope of the present invention to provide a heat-shrinkable, impact resistant multilayer film having the general structure:
seal/core/barrier/core/abuse
wherein each of the core layers comprises the same homogeneous long chain branched single site catalyzed copolymer of ethylene and an alpha-olefin having from 4 to 10 carbon atoms, said copolymer having a density from about 0.89 g/cc to about 0.91 g/cc,
which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

A preferred embodiment of this heat-shrinkable, impact-resistant multi-layer film comprises:
a) a sealing layer;
b) a first core layer comprising a homogeneous ethylene octene copolymer having an I₁₀//I₂ greater than or equal to 5.63 and a Mw/Mn less than or equal to (I₁₀/I₂). 4.63 and having a density of from about 0.89 g/cc to about 0.91 g/cc.
c) a barrier layer;
d) a second core layer comprising a homogeneous ethylene octene copolymer having an I₁₀/I₂ greater than or equal to 5.63 and a Mw/Mn less than or equal to (I₁₀/I₂). 4.63 and having a density of from about 0.89 g/cc to about 0.91 g/cc; and
e) an abuse layer,
which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

The respective compositions of the seal, barrier and abuse layers may be chosen from those polymeric resins or resin blends which provide the requisite functional properties. Examples of materials appropriate for use in the seal layer include EVA, LLDPE, VLDPE, EAA, EMAA, ionomers, homogeneous linear ethylene alpha-olefins and homogeneous branched ethylene alpha-olefins. Examples of materials appropriate for use in the abuse layer include EVE LLDPE, VLDPE, homogeneous linear ethylene alpha-olefins, homogeneous branched ethylene alpha-olefins, polypropylene, nylon, and high density polyethylene. Example of materials appropriate for use in the barrier layer include vinylidene chloride-vinyl chloride, vinylidene chloride methyl acrylate, ethylene vinyl alcohol, acrilonitrile and nylon. However, other materials which have the needed properties of sealbility and seal integrity abuse resistance and low gas transmission are also appropriate for use in the seal layer, abuse layer and barrier layer, respectively, of a film in accordance with the present invention. Each of the two core layers contain a homogeneous ethylene alpha-olefin copolymer either alone or in a blend with another polymeric material.

A preferred embodiment of such a multi-layer heat-shrinkable film having the above general structure is a heat-shrinkable, impact-resistant multi-layer film comprising:
a heat-shrinkable, impact-resistant multilayer film comprising:
   a) a seal layer;
   b) a first core layer comprising a homogeneous, long chain branched ethylene alpha-olefin copolymer having a density of from about 0.89 g/cc to about 0.91 g/cc;
   c) a barrier layer;
   d) a second core layer comprising a homogeneous, long chain branched ethylene alpha-olefin copolymer having a density of from about 0.89 g/cc to about 0.91 g/cc: and
   e) an abuse layer,
wherein the homogeneous, branched ethylene alpha-olefin of the first core layer differs from that of the second core layer,
which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

A preferred embodiment of this type of heat-shrinkable, impact-resistant multi-layer film has the general structure:
seal/core/barrier/core/abuse
wherein each of the two core layers comprises the same homogeneous copolymer of ethylene and octene having an I₁₀/I₂ greater than or equal to 5.63 and so Mw/Mn less than or equal to (I₁₀/I₂) - 4.63, said copolymer having a density of
from about 0.89 g/cc to about 0.91 g/cc, which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

For each of the general structures set forth above it should be noted that further internal layers may be provided to promote inner layer adhesion or add bulk as may be necessary.

It has been found that a preferred method for producing a film in accordance with the present invention is an extrusion coating method such as described above. By such method a portion of the film structure is extruded, cooled and subjected to irradiation prior to be extrusion coated with the remaining layers and subsequently oriented. Preferably, the seal layer and a first core layer are extruded and irradiated prior to extrusion coating of the barrier layer, second core layer and abuse layer and subsequent orientation. Most preferably the seal layer, first core layer and a third layer chosen to promote adhesion to the barrier layer are extruded and irradiated, followed by extrusion coating of the barrier layer, an adhesion promoting tie layer, the second core layer and the abuse layer and then orientation. For the present preferred method it has been found that the use of homogeneous branched ethylene alpha-olefins in the core layers reduces extrusion head pressure and allow for increased orientation speeds.

The following examples are representative of the preferred embodiments of the present films containing homogeneous branched ethylene alpha-olefin copolymers. In order to evaluate such films the following tests were employed:
Tensile Strength: A measure of the force required under constant elongation to break a specimen of the film: measured by ASTM D 882.
Elongation: A measure of the percent extension required to break a specimen of the film; measured by ASTM D 882.
Modulus: The ratio of the change in force to the change in elongation in the straight line portion of an Instron Tensile Testing curve; measured by ASTM D 882 - Method A.
Tear Propagation: The force required to propagate a tear from a tiny slit made by a sharp blade in a specimen of the film; measured by ASTM D 1938.
Free Shrink: The percent dimensional change in a 10 cm. x 10 cm. specimen of film when subjected to a selected heat: measured by ASTM D 2732.
Ball Burst: The energy necessary to burst and penetrate a restrained specimen of film; measured by ASTMD 3420.
Instrumented Impact: The energy necessary to puncture a restrained specimen of film, similar to ball burst, defined above. However, the Instrumented Impact Tester has the ability to measure the tensile/elongation curve to break The "gradient" is the ratio of the change in force to change in elongation in the straight line portion of the curve. "Peak" is a measure of the maximum force exerted on the specimen to impart rupture. "Impact Energy" is a measure of the energy adsorbed by the sample prior to rupture. Instrumented Impact is measured by ASTM D 3763.
Haze: The percentage of transmitted light which is scattered forward while passing through a specimen; measured by ASTM D 1003 - Method A.
Clarity: A measure of the distortion of an image viewed through a specimen; measured by ASTM D 1746.
Gloss: The surface reflectance or shine of a specimen; measured by ASTM D 2457.
Parallel Plate: A bag is confined between two plates a specified distance apart and is inflated until its seal fails. The pressure level inside the bag at the point of failure is a measure of seal quality. Results are reported in inches of water pressure (IOWP).
LRHB (Linear Ramped Hot Burst): A clean sealed bag is inflated to a specified dwell pressure and the seal area is submerged in hot water at 182°F (83°C). After five seconds the pressure inside the bag is increased at the rate of 2 inches of water/second. The time to failure and burst pressure is a measure of seal quality. Test results are reported in seconds and inches of water pressure (IOWP).
LRHB-G (Linear Ramped Hot Burst - Grease): The procedure is the same as the LRHB test described above except peanut oil is first applied to the seal area.
VPHB (Variable Pressure Hot Burst): As with the LRHB test described above, a clean sealed bag is inflated to a specified dwell pressure and the seal area is submerged in hot water at 182 F (83°C). After five seconds the pressure inside the bag is increased at a specified rate ranging 1 to 7 inches of water/second (2.54-18 cm/second). Here again, test results are reported as seconds and inches (cm) of water pressure (IOWP).
VPHB-G (Variable Pressure Hot Burst - Grease) : The procedure is the same as the VPHB test described above except peanut oil is first applied to the seal area.
Gel: A measure of the relative amount of ultra high molecular weight polymer present in a sample. A gel measurement can provide an indication of the level of crosslinking which is present in a sample since the amount of polymer which is collected as gel increases with crosslinking. Gel is determined by solvent extraction with boiling toluene. In this method a specimen weighting 0.4 grams is extracted for 21 hours in a cellulose thimble, removed, dried and reweighed. The percentage of gel is calculated by ratioing the polymer remaining (toluene insoluble fraction) to the original weight. However, a gel value of 0% cannot reliably indicate that no crosslinking has occurred. Rather, the level of crosslinking may not be great enough to provide measurable gel.
DSC: The differential scanning calorimeter (DSC) is an instrument which measures the heat flow to a polymer sample during the programmed heating of it at 10°C per minute. The trace obtained from the DSC can be used to characterize a sample's starting and ending melting point as well as its peak melting point(s).
Polydispersity (Mw/Mn): A measure of the uniformity of chain lengths within a polymer sample. It defines the breadth of molecular weight distribution. It is obtained by dividing the weight average molecular weight (Mw) by the number average molecular weight (Mn). The Mw and Mn are determined by Gel Permeation Liquid Chromatography.
Of the following examples only Examples 29-46, 49-66, 69-86 and 89-100 one examples according to the present invention.

### Example 1

A two layer coextruded precursor film having the structure inner layer/outermost layer was formed. The inner layer was a blend of 90% by weight of No 295-000. a 6.7% vinyl acetate EVA supplied by Quantum, and 10% by weight of Dowlex 2045. The outermost layer was a blend of 85% by weight of XUR-1567-48562-B9, a homogeneous ethylene octane copolymer having a density of 0.904 g/cc and a 1.0 MI with limited long chain branching sold on a developmental basis by DOW. and 15% by weight of EA 719-009. an ethylene butyl-acrylate copolymer having 18.5% by weight butyl-acrylate supplied by Quantum. Following irradiation, the precursor film was extrusion coated with a barrier layer of a vinylidene chloride methyl acrylate from Dow and an outer abuse layer of a blend of 92.5% by weight of LD 318.92 from Exxon, a 9% vinyl acetate EVA and 7.5% by weight of Dowlex 2045.

The resultant four layer film was then oriented by a trapped bubble method out of hot water.

### Example 2

The procedure set forth in Example 1 was repeated with the exception that the outermost layer of the precursor film was 85% by weight of XUR-1567-48562-B9 from Dow and 15% by weight of Nucrel 1202HC, an ethylene methacrylic acid supplied by DuPont.

### Example 3

The procedure set forth in Example 1 was repeated with the exception that the outermost layer of the precursor film was 85% by weight of XUR-1567-48562-B9 from Dow and 15% by weight of Bynel CXA 3101, an anhydride grafted EVA having 18.4% vinyl acetate supplied by DuPont.

### Example 4

The procedure set forth in Example 1 was repeated with the exception that the outermost layer of the precursor film was 85% by weight of XUR-1567-48562-B9 from Dow and 15% by weight of LD 318.92 from Exxon, a 9% vinyl acetate EVA.

### Example 5

For comparative purposes, the procedure set forth in Example 1 was repeated with the exception that the outermost layer of the precursor film was 85% by weight of Dowlex 2045 and 15% by weight of EA 719-009 an 18.5% butyl acrylate EBA

### Examples 6-10

The oriented multilayer films of Examples 1-5 were tested for instrumented impact, free shrink and "peel", a measure of bond strength between the outermost layer of the precursor film and the barrier layer which has been extrusion coated onto it. The results are given below in Table I. The instrumented impact and T peel numbers for the films of Examples 1-4 compare favorably to those of comparative Example 5. The free shrink of the films embodying the present invention are superior to those of the prior art structure. It should be noted that the numbers given for comparative Example 5 are representative for a series of production runs.

**Table I**

| Ex. # | Film of | instrumented Peak lbs (kg) | Impact Energy, ft.lbs (Nm) | Free Shrink L & T | T Peel lbs/in (N/m) |
|---|---|---|---|---|---|
| 6 | 1 | 51.0 (23.1) | 2.35 (3.19) | 73 | 0.143 (25.0) |
| 7 | 2 | 55.7 (25.3) | 2.62 (3.55) | 73 | 0.157 (27.5) |
| 8 | 3 | 49.3 (22.4) | 2.32 (3.15) | 75 | 0.214 (37.5) |
| 9 | 4 | 54.0(24.5) | 2.70 (3.66) | 71 | 0.133 (23.3) |
| 10 | 5 | 51.3 (23.3) | 2.20 (2.98) | 49.9 | 0.180 (31.5) |

### Example 11-19

The films of Examples 11-19 each are formed of a precursor film having an inner layer of 90% NA 295-000, a 6.7% EVA supplied by Quantum and 10% Dowlex 2045, a core layer and an outermost adhesive layer of EP 4062-3, a 15% vinyl acetate EVA supplied by DuPont Following irradiation at a selected dosage the precursor film is extrusion coated with a barrier layer of a vinylidene chloride methyl acrylate from Dow and an outer abuse layer of 92.5% LD 318.92 and 7.5% Dowlex 2045.

Thereafter the total structure was oriented out of hot water by a trapped bubble technique with constant orientation preheat and hot bath temperatures of 195°F (91°C).

The core layer composition and irradiation dosage for each structure are given below in Table II. Also shown are orientation speeds. It should be noted that for the films of Examples 11-16, orientation speed increases with increasing irradiation dosage, whereas such relationship is not seen for comparative Examples 17-19.

The resins employed in the core layer are XUR-1567-48562-B9. a homogeneous ethylene octene copolymer having a density of 0.904 g/cc and a 1.0 MI with limited long chain branching supplied by Dow represented by B9 (below), XUR-1567-48562-B4, a homogeneous ethylene octane copolymer having a density of 0.909 g/cc and a 1.0 MI with limited long chain branching supplied by Dow represented by B4 below, and Attane 4203, a heterogeneous ethylene octene copolymers with a density of 0.905 g/cc supplied by Dow represented by 4203.

The film structure and target percent thickness per layer for each film was:

| | | | | |
|---|---|---|---|---|
| Inner | /Core | /Adhesive/ | /Barrier | /Abuse |
| 11.9 | 49.6 | 6.0 | 8.7 | 23.8 |

**Table II**

| Ex. # | Core | Dosage MR | Orientation Speed feet/min. (m/min) |
|---|---|---|---|
| 11 | B9 | 2 | 46(14) |
| 12 | B9 | 4 | 53 (16) |
| 13 | B9 | 6 | 53 (16) |
| 14 | B4 | 2 | 40 (12) |
| 15 | B4 | 4 | 46 (14) |
| 16 | B4 | 6 | 51 (15) |
| 17 | 4203 | 2 | 46 (14) |
| 18 | 4203 | 4 | 46 (14) |
| 19 | 4203 | 6 | 46 (14) |

### Examples 20-28

The oriented multilayer films of Examples 11-19 were tested for instrumented impact and free shrink The results are given below in Table III. The films of Examples 11-16 compare favorably in all values to those of comparative Examples 17-19.

**Table III**

| Ex. | Film of | Instrumented Peak lbs (kg) | Impact Energy ft.lbs (Nm) | Free Shrink L & T |
|---|---|---|---|---|
| 20 | 11 | 59.6 (27.0) | 3.45 (4.68) | 72 |
| 21 | 12 | 59.9 (27.2) | 3.08 (4.18) | 71 |
| 22 | 13 | 61.5 (27.9) | 3.17 (4.30) | 74 |
| 23 | 14 | 63.0 (28.6) | 3.36 (4.56) | 68 |
| 24 | 15 | 60.4 (27.4) | 2.96 (4.01) | 67 |
| 25 | 16 | 64.6 (29.3) | 3.39 (4.60) | 69 |
| 26 | 17 | 52.8 (24.0) | 2.83 (3.84) | 76 |
| 27 | 18 | 55.3 (25.1) | 2.87 (3.89) | 74 |
| 28 | 19 | 56.7 (25.7) | 3.01 (4.08) | 77 |

### EXAMPLE 29

A three layer coextruded precursor film having the structure: inner layer/core layer/outermost layer was formed. The inner layer was a blend of 90% by weight of NA 295-000. a 6.7% vinyl acetate EVA supplied by Quantum, 10% by weight of Dowlex 2045, a 0.920 density heterogeneous linear ethylene octane copolymer from Dow. The outermost layer was EP 4062-2, a 15% vinyl acetate EVA supplied by DuPont The core layer was XU59220.01. lot 427833 a homogeneous methylene octene copolymer having a density of 0.9016 g/cc and a 0.9 MI with long chain branching sold on a developmental basis by Dow. The resin has an I₁₀/I₂ of 10.9 and a Mw/Mn of 2.03.

Following irradiation, the precursor film is extrusion coated with a barrier layer of a vinylidene chloride methyl acrylate from Dow blended with an epoxidized soybean oil and an ethylene ethyl acrylate, an adhesive layer of Elvax 3175GC, a 28% vinyl acetate EVA from DuPont, a core layer of XU 59220.01, lot 427833 from Dow and an outer abuse layer of a blend of 92.5% by weight of LD 318.92 from Exxon, a 9% vinyl acetate EVA, and 7.5% by weight of Dowlex 2045.

The resultant seven layer film was then oriented by a trapped bubble method out of hot water. The preheat temperature 192°F (89°C) and the hot bath was 197°F (92°C). The final oriented structure was 1.8 mil (0.046 mm) thick with the individual layers having target thicknesses as follows:

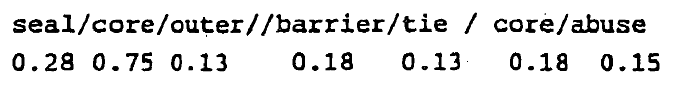

### EXAMPLE 30

The procedure set forth in Example 29 was repeated with a final oriented structure having a thickness of 2.2 mils (0.056 mm). The individual layers had a target thickness as follows:

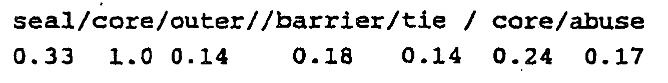

### EXAMPLE 31

The procedure set forth in Example 29 was repeated with a final oriented structure having a thickness of 2.7 mils (0.069 mm). The individual layers had a target thickness as follows:

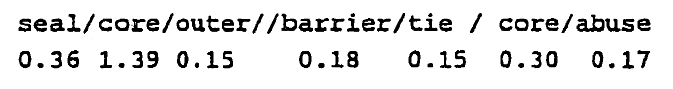

### EXAMPLE 32

The procedure set forth in Example 29 was repeated with the following exceptions Preheat temperature was 191°F (88°C) and the hot bath was 184°F (84°C). The final oriented structure had a thickness of 3.0 mils (0.076). The individual layers had a target thickness as follows:

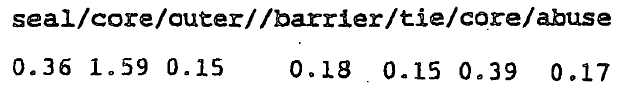

### EXAMPLES 33

The procedure of Example 32 was repeated with the only exception being a difference in orientation condition. The preheat temperature was 199°F (93°C) and the hot bath was 195°F (91°C).

### EXAMPLE 34

The procedure set forth in Example 29 was repeated with the core layers being replaced with XU59243.00.a homogeneous ethylene octane copolymers having a density of 0.904 g/cc and a 0.8 MI with long chain branching sold on a developmental basis by Dow. The resin has an I₁₀/I₂ of 9.2 and Mw/Mn of 2.17. For orientation, the preheat temperature was 194°F (90°C) and the hot bath was 190°F (88°C). The final oriented structure had a thickness of 3.0 mils (0.076 mm). The individual layers had target thicknesses as follows:

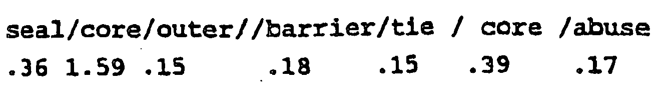

### EXAMPLE 35

The procedure of Example 34 was repeated with the only exception being different orientation conditions. The preheat temperature was 200°F (93°C) and the hot bath was 195°F (91°C).

### EXAMPLE 36

The procedure set forth in Example 29 was repeated with the core layers being replaced with XU 59220.00, a homogeneous ethylene octane copolymer having a density of 0.904 g/cc and a 0.9 MI with long chain branching sold on a developmental basis by Dow The resin has an I₁₀/I₂ of 11.3 and an Mw/Mn of 2.4. The preheat temperature was 194°F (90°C) and the hot bath was 190°F (88°C). The final oriented structure had a thickness of 3.0 mils (0.076 mm). The individual layers had target thicknesses as set forth in Example 32 above.

### EXAMPLE 37

The procedure of Example 36 was repeated with the only exception being a difference in orientation conditions. The preheat temperature was 200°F (93°C) and the hot bath was 196°F (91°C).

### EXAMPLE 38

The procedure set forth in Example 29 was repeated with the core layers being replaced with XU 59220.01, lot 421733, a homogeneous ethylene octene copolymer having a density of 0.9028 and a 0.9 MI with long chain branching sold on a developmental basis by Dow. The resin has an I₁₀/I₂ of 10.5 and an Mw/Mn of 2.4. The preheat temperature was 194°F (90°C) and the hot bath was 190°F (88°C). The final oriented structure had a thickness of 3.0 mils (0.076 mm) and individual layers as set forth in Example 32 above.

### EXAMPLE 39

The procedure of Example 38 was repeated with the only exception being a difference in orientation conditions. The preheat temperature was 200°F (93°C) and the hot bath was 195°F (91°C).

### EXAMPLE 40

The procedure set forth in Example 29 was repeated with the core layers being replaced with XU 59220.02, a homogeneous ethylene octane copolymer having a density of 0.906 and a 0.8 MI with long chain branching sold on a developmental basis by Dow. The resin has an I₁₀/I₂ of 11.8 and an Mw/Mn of 2.2. The preheat temperature was 197°F (92°C) and the hot bath was 194°F (90°C). The final oriented structure and individual layers had its thickness of 3.0 mils (0.076 mm) and individual layer as set forth in Example 32 above.

### EXAMPLE 41

The procedure of Example 40 was repeated with the only exception being a difference in orientation condition. Preheat temperature was 200°F (93°C) and the hot bath was 195°F (91°C).

### EXAMPLE 42

The procedure set forth in Example 29 was repeated with the core layers being replaced with XU 59220.03, a homogeneous ethylene octene copolymer having a density of 0.898 and a 0.9 MI with long chain branching sold on a developmental basis by Dow The resin has an I₁₀/I₂ of 10.5 and an Mw/Mn of 2.0. The preheat temperature was 187°F (86°C) and the hot bath was 181°F (83°C). The final structure and individual layers had thicknesses as set forth above in Example 32.

### EXAMPLE 43

The procedure of Example 42 with the only exception being a difference in orientation condition. The preheat temperature was 200°F (93°C) and the hot bath was 195°F (91°C).

### EXAMPLE 44

The procedure set forth in Example 29 was repeated with the core layers being replaced with XU 59220.04. a homogeneous ethylene octene copolymer having a density of .896 and a 0.9 MI with long chain branching sold on a developmental basis by Dow. The resin has an I₁₀/I₂ of 10.5 and an Mw/Mn of 2.17. The preheat temperature was 188°F (87°C) and the hot bath was 182°F (83°C). The final oriented structure and individual layers had thicknesses as set forth in Example 32 above.

### EXAMPLE 45

The procedure of Example 44 was repeated with the only exception being a difference in orientation condition. The preheat temperature 200°F (93°C) and the hot bath was 195°F (91°C).

### EXAMPLE 46

The procedure set forth in Example 29 was repeated with the core layers being replaced with Insite C24, a homogeneous branched ethylene octane copolymer having a density of 0.904 g/cc and a 0.9 MI sold on a developmental basis by Dow. The resin has an I₁₀/I₂ of 9.2 and an Mw/Mn of 2.0. The preheat temperature was 200 °F (93°C) and the hot bath was 195 °F (91 °C). The final structure was 3.0 mils (0.076 mm) and individual layers had target thicknesses as set forth in Example 32 above.

### EXAMPLE 47

For comparative purposes the procedure set forth in Examples 29 was repeated with the core layers being replaced with Attane 4203, a heterogeneous octane copolymer from Dow having a density of 0.905 g/cc and a 0.8 MI. The resin has an I₁₀/I₂ of 8.2 and an Mw/Mn of 3.8. The preheat temperature was 194°F (90°C) and the hot bath was 190°F (91°C). The final oriented structure had a thickness of 3.0 mils (0.076 mm) and individual layers had target thicknesses as set forth above in Example 32.

### EXAMPLE 48

For comparative purposes, the procedure of Example 47 was repeated with the only exception being a difference in orientation condition. The preheat temperature was 200°F (93°C) and hot bath was 195°F (91 °C).

### EXAMPLES 49 - 68

To evaluate their physical properties, then oriented multilayer films of Examples 29-48 were tested for instrumented impact and free shrink. Examples 34 and 35 are based on core layers of XU 59243.00, a homogeneous branched ethylene octene from Dow which has a density of 0.904 g/cc and a 0.8 MI, a density and melt index essentially the same as that for Attane 4203, the heterogeneous linear ethylene octene copolymer employed in Comparative Examples 47 and 48. However, the film structures of Examples 34 and 35 show greatly improved peak load and energy to break as compared to the films of Examples 47 and 48, respectively. The results are given in Table IV below.

**Table IV**

| EX.# L&T | FILM OF | PEAK LOAD. lbs (kg) | ENERGY TO BREAK, ft. lbs (Nm) | FREE SHRINK |
|---|---|---|---|---|
| 49 | 29 | 49 (22.2) | 2.3 (3.1) | 83 |
| 50 | 30 | 53 (24.0) | 2.9 (3.9) | 80 |
| 51 | 31 | 64 (29.0) | 4.2 (5.7) | 81 |
| 52 | 32 | 83 (37.7) | 6.2 (8.4) | 86 |
| 53 | 33 | 68 (30.8) | 4.9 (6.6) | 76 |
| 54 | 34 | 98 (44.5) | 9.3 (12.6) | 75 |
| 55 | 35 | 90 (40.8) | 8.0 (10.9) | 67 |
| 56 | 36 | 84 (38.1) | 7.4 (10.0) | 76 |
| 57 | 37 | 73 (33.1) | 5.4 (7.3) | 70 |
| 58 | 38 | 70 (31.8) | 5.1 (6.9) | 77 |
| 59 | 39 | 74 (33.6) | 6.0 (8.1) | 73 |
| 60 | 40 | 81 (36.7) | 5.4 (7.3) | 68 |
| 61 | 41 | 82 (37.2) | 6.0 (8.1) | 66 |
| 62 | 42 | 77 (34.9) | 6.5 (8.8) | 96 |
| 63 | 43 | 58 (26.3) | 5.0 (6.8) | 78 |
| 64 | 44 | 75 (34.0) | 6.3 (8.5) | 96 |
| 65 | 45 | 56 (25.4) | 4.9 (6.6) | 80 |
| 66 | 46 | 81 (36.7) | 10.6 (14.4) | 77 |
| 67 | 47 | 78 (35.4) | 5.1 (6.9) | 79 |
| 68 | 48 | 75 (34.0) | 5.6 (76) | 74 |

### EXAMPLES 69-88

To evaluate the processability of the homogeneous branched ethylene octene copolymers found in each of the above film structures, the orientation speed was noted for each structure at each orientation temperature. Surprisingly, the film structures containing the homogeneous branched ethylene octene copolymers from Dow which showed improves toughness in Examples 49 - 66 above generally oriented faster than the films of Comparative Example 47 and 48. The results are given in Table V below.

**Table V**

| EX.# | FILM OF | PREHEAT (°F) | HOT BATH, °F (°C) | ORIENTATION SPEED, ft/min (m/min) |
|---|---|---|---|---|
| 69 | 29 | 192 (89) | 197(92) | 51 (15.5) |
| 70 | 30 | 192 (89) | 197 (92) | 53 (16.1) |
| 71 | 31 | 192 (89) | 197 (92) | 50 (15.2) |
| 72 | 32 | 191 (88) | 184 (84) | 32 (9.8) |
| 73 | 33 | 199 (93) | 195 (91) | 45 (13.7) |
| 74 | 34 | 194 (90) | 190 (88) | 33 (10.1) |
| 75 | 35 | 200 (93) | 195 (91) | 40 (12.2) |
| 76 | 36 | 194 (90) | 190 (88) | 30 (10.1) |
| 77 | 37 | 200 (90) | 195 (91) | 37 (11.3) |
| 78 | 38 | 194(90) | 190(88) | 33 (10.1) |
| 79 | 39 | 200 (93) | 195 (91) | 40 (12.2) |
| 80 | 40 | 197 (92) | 194 (90) | 32 (98 |
| 81 | 41 | 200 (93) | 195 (91) | 35 (10.7) |
| 82 | 42 | 187 (86) | 181 (83) | 40 (12.2) |
| 83 | 43 | 200 (93) | 195 (91) | 51 (15.5) |
| 84 | 44 | 188 (87) | 182 (83) | 36 (11.0) |
| 85 | 45 | 200 (93) | 195 (91) | 46 (14.0) |
| 86 | 46 | 200(93) | 195 (91) | 53 (16.1) |
| 87 | 47 | 194 (90) | 190 (88) | 32 (9.8) |
| 88 | 48 | 200 (93) | 195 (91) | 36 (11.0) |

### EXAMPLES 89-90

To evaluate the processability of the homogeneous long chain branched ethylene octene copolymers incorporated into the present film structures, the head pressures were noted during extrusion of both the substrate and the coating of the films of Example 34 and Comparative Example 47. Examples 29-33 and 36-45 are not included in Table VI below because valid comparisons can only be made between resins of the same melt index. Example 46 is not included because it was not made under comparable extrusion conditions. It should be noted that although the films of Examples 35 and 48 contain the same polymeric materials as those of Examples 34 and 47, evaluated below, they are not included because they result from the same extrusion runs. That is, Example 35 is the orientation of the unoriented tape structure described in Example 34 under differing orientation conditions from those described in Example 34. The same can be said for Example 48 with respect to Example 47. The homogeneous branched ethylene octene copolymer employed in Example 34 provided lower extrusion head pressures than the heterogeneous linear ethylene octene copolymer of Example 47.

**Table VI**

| EX.# | FILM OF | HEAD PRESSURE OF 1 ST EXTRUDER, psi (MPa) | HEAD PRESSURE OF 2ND EXTRUDER psi (MPa) |
|---|---|---|---|
| 89 | 34 | 5230 (36.06) | 5750 (39.65) |
| 90 | 47 | 5600 (38.62) | 6267 (43.21) |

### EXAMPLE 91

The procedure set forth in Example 29 was repeated with the two core layers being replaced with a blend of 80% by weight of XU59243.00, a homogeneous ethylene octene copolymer having a density of 0.904 g/cc and a 0.8 MI with long chain branching sold on a developmental basis by Dow, and 20% by weight of LD-318.92,a 9% VA ethylene vinyl acetate sold by Exxon. The XU59243.00 resin has an I₁₀/I₂ of 9.2 and a Mw/Mn of 2.17

The final oriented structure had a thickness of 3.0 mils. The individual layers had a target thickness as follows:

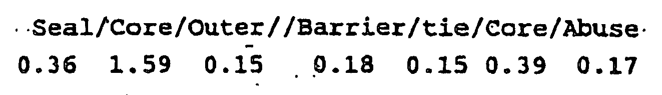

### EXAMPLE 92

The procedure set forth in Examples 29 was repeated with the two core layers being replaced with a blend of 90% by weight of XU 59243.00 and 10% by weight of LD-318.92 from Exxon.

The final oriented structure had a thickness of 3.0 mils. The individual layers had a target thickness as follows:

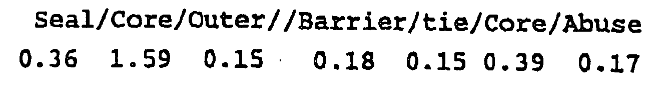

### EXAMPLE 93

The procedure set forth in Example 29 was repeated with the two core layers being replaced with a blend of 80% by weight of XU59243.00 and 20% by weight of Elvax 3175GC, a 28% VA ethylene vinyl acetate sold by DuPont

The final oriented structure had a thickness of 3.0 mils. The individual layers had a target thickness as follows:

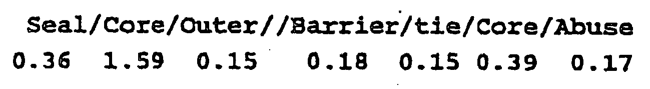

### EXAMPLE 94

The procedure set forth in Example 29 was repeated with the two core layers being replaced with a blend of 90% by weight of XU59243.00 and 10% by weight of Elvax 3175GC from DuPont.

The final oriented structure had a thickness of 3.0 mils. The individual layers had a target thickness as follows:

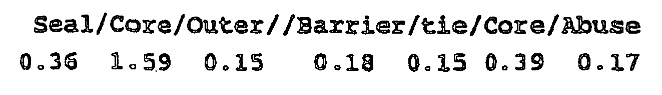

### EXAMPLE 95

The procedure set forth in Example 29 was repeated with the two core layers being replaced with a blend of 85% by weight of XU59243.00 and 15% by weight of Escorene LD-720.92, a 19% VA ethylene vinyl acetate sold by Exxon.

The final oriented structure had a thickness of 3.0 mils. The individual layers had a target thickness as follows:

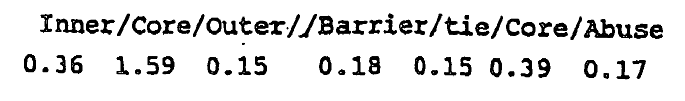

### EXAMPLE 96-100

The oriented multilayer films of Examples 91-95 were tested for instrumented impact and free shrink. The results are given below in Table VII.

**Table VII**

| EX.# | FILM OF | INSTRUMENTED IMPACT | | FREE SHRINK |
|---|---|---|---|---|
| | | PEAK LOAD, Ibs (kg) | ENERGY TO BREAK, ft.lbs (Nm) | L&T |
| 96 | 91 | 84 (38.1) | 5.6 (7.6) | 74 |
| 97 | 92 | 86 (39.0) | 5.8 (7.9) | 76 |
| 98 | 93 | 84 (38.1) | 5.0 (6.8) | 82 |
| 99 | 94 | 96 (43.5) | 6.2 (8.4) | 80 |
| 100 | 95 | 85 (38.6) | 5.1 (6.9) | 80 |

The foregoing description of preferred embodiments of the invention have been presented for purposes of illustration and description. It is not intended to be exhaustive or to limit the invention to the precise form disclosed, and modifications and variations are possible in light of the above teachings or may be acquired from practice of the invention. The embodiment were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A heat-shrinkable, impact-resistant multilayer film comprising at least two core layers, each of said core layers comprising a homogeneous single site catalyzed copolymer of ethylene and an alpha-olefin having from four to ten carbon atoms and having long chain branching, said copolymer having a density of from about 0.89 g/cc to about 0.91 g/cc, which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

2. The heat-shrinkable film set forth in claim 1, wherein the homogeneous branched copolymer of one of said two core layers is identical to the homogeneous branched copolymer of the other of said layers.

3. The heat-shrinkable film set forth in claim 1, wherein the alpha-olefin having from four to ten carbon atoms is octene.

4. The heat-shrinkable film of claim 1, wherein said homogeneous branched copolymer is mended with another thermoplastic homopolymer or copolymer.

5. The heat-shrinkable film of claim 1, wherein said other thermoplastic Homopolymer or copolymer is a copolymer of ethylene and a second comonomer selected from the group consiting of vinyl acetate, alkyl acrylate, carbon monoxide, butadiene, styrene, acrylic acid, methacrylic acid, a metal neutralized salt of an acrylic acid, and an alpha-ofefin.

6. The heat-shrinkable film of claim 1, wherein the homogeneous branched copolymer has a density of from about 0.90 g/cc to about 0.91 g/cc.

7. A heat-shrinkable, impact-resistant multilayer film having the general structure:
seal/core/barrier/core/abuse
wherein each of the core layers comprises the same homogeneous long chain branched single-site catalyzed copolymer of ethylene and an alpha-olefin having from four to ten carbon atoms, said copolymer having a densitry of from about 0.89 g/cc to about 0.91 g/cc, which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

8. The heat-shrinkable film of claim 7, wherein said alpha-olefin having from four to ten carbon atoms in octene.

9. The heat-shrinkable film of claim 7, wherein said homogeneous branched copolymer is blended with another thermoplastic homopolymer or copolymer.

10. The heat-shrinkable film of claim 9, wherein said other thermoplastic homopolymer or copolymer is a copolymer of ethylene and a second comonomer selected from the group consisting of vinyl acetate, alkyl acrylate, carbon monoxide, butadiene, styrene, acrylic acid, methacrylic add, a metal neutralized salt of an acrylic acid, and an alpha-olefin.

11. The heat-shrinkable film of claim 7, wherein the homogeneous branched copolymer has a density of from about 0.90 g/cc to about 0.91 g/cc.

12. The heat-shrinkable film of claim 7, wherein the barrier layer comprises a vinylidene chloride copolymer.

13. The heat-shrinkable film of claim 12, wherein the barrier layer comprises a vinylidene chloride-methyl acrylate copolymer.

14. The heat-shrinkable film of claim 7, wherein the seal layer comprises a copolymer of ethylene and a comonomer selected from the group consisting of vinyl acetate, alkyl acrylate, acrylic acid, methacrylic acid, a metal neutralized salt of an acrylic acid, and an alpha-olefin.

15. The heat-shrinkable film set forth in claim 7, further including additional internal layers to promote interlayer adhesion.

16. A heat-shrinkable, impact-resistant multilayer film comprising:
a) a seal layer;
b) a first core layer comprising a homogeneous, long chain branched ethylene alpha-olefin copolymer having a density of from about 0.89 g/cc to about 0.91 g/cc;
c)a barrier layer;
d) a second core layer comprising a homogeneous, long chain branched ethylene alpha-olefin copolymer having a density of from about 0.89 g/cc to about 0.91 g/cc: and
e) an abuse layer;
which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration

17. The heat-shrinkable film of claim 16, further including additional internal layers to promote interlayer adhesion.

18. A heat-shrinkable, impact-resistant multilayer film, having the general structure:
seat/core/barrier/core/abuse
wherein each of the two core layers comprises the same homogeneous copolymer of ethylene and octene having an I₁₀/I₂ greater than or equal to 5.63 and a Mw/Mn less than or equal to (I₁₀/I₂) - 4.63, said copolymer having a density of from about 0.89 g/cc to about 0.91 g/cc, which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

19. The heat-shrinkable film of claim 18, wherein at least one of said core layers further includes another thermoplastic homopolymer or copolymer blended with the homogeneous ethylene octene polymers.

20. The heat shrinkable film of claim 19, wherein said other thermoplastic homopolymer or copolymer is a copolymer of ethylene and a second comonomer selected from the group consisting of vinyl acetate, alkyl acrylate, carbon monoxide, butadiene, styrene, acrylic acid, methylacrylic acid, a metal neutralized salt of an acrylic acid and an alpha-olefin.

21. The heat-shrinkable film of claim 20, further including additional internal layers to promote interlayer adhesion.

22. A heat-shrinkable, impact-resistant multilayer film comprising:
a) a sealing layer;
b) a first core layer comprising a homogeneous ethylene octene copolymer having an I₁₀/I₂ greater than or equal to 5.63 and a Mw/Mn less than or equal to (I₁₀/I₂) - 4.63 and having a density of from about 0.89 g/cc to about 0.91 g/cc.
c) a barrier layer;
d) a second core layer comprising a homogeneous ethylene octene copolymer having an I₁₀/I₂ greater than or equal to 5.63 and a Mw/Mn less than or equal to (I₁₀/I₂) - 4.63 and having a density of from about 0.89 g/cc to about 0.91 g/cc: and
e) an abuse layer,
which film has been formed by an extrusion process followed by cooling the film to a solid state, reheating the film to its softening point, stretching the film in the longitudinal and transverse directions, and quickly cooling the film while retaining its stretched dimensions to set the film in the oriented molecular configuration.

23. The heat-shrinkable multilayer film as set forth in claim 22, wherein the homogeneous ethylene octene copolymer of said first core layer differs from that of said, second core layer.

24. The heat shrinkable film set forth in claim 22, further including additional internal layers to promote interlayer adhesion.

25. The heat-shrinkable films set forth in claim 22, wherein the homogeneous ethylene octene copolymer of at least one of said first and second core layers is blended with another thermoplastic homopolymer or copolymer.

26. The heat-shrinkable film set forth in claim 25, wherein said other thermoplastic homopolymer or copolymer is a copolymer of ethylene and a second comonomer selected from the group consisting of vinyl acetate, alkyl acrylate, carbon monoxide, butadiene, styrene, acrylic acid, methacrylic add, a metal neutralized salt of an acrylic acid and an alpha olefin.

## Patentansprüche

1. Heißschrumpfbare, schlagzähe Mehrschichtfolie, umfassend mindestens zwei Kernschichten, wobei jede der Kernschichten ein homogenes, "single-site"-katalysiertes Copolymer aus Ethylen und einem α-Olefin mit 4 bis 10 Kohlenstoffatomen umfasst und eine Langkettenverzweigung aufweist, wobei das Copolymer eine Dichte von etwa 0,89 g/cm³ bis etwa 0,91 g/cm³ aufweist, und die Folie hergestellt worden ist durch ein Extrusionsverfahren, anschließendes Abkühlen der Folie bis zum festen Zustand, erneutes Erhitzen der Folie bis zum Erweichungspunkt, Recken der Folie in Längs-und Querrichtung und rasches Abkühlen der Folie unter Beibehaltung ihrer gereckten Ausmaße, um die Folie in der orientierten molekularen Konfiguration fest werden zu lassen.

2. Heißschrumpfbare Folie nach Anspruch 1, wobei das homogene, verzweigte Copolymer einer der zwei Kernschichten identisch ist mit dem homogenen, verzweigten Copolymer der anderen der Schichten.

3. Heißschrumpfbare Folie nach Anspruch 1, wobei das α-Olefin mit 4 bis 10 Kohlenstoffatomen Okten ist.

4. Heißschrumpfbare Folie nach Anspruch 1, wobei das homogene, verzweigte Copolymer mit einem anderen thermoplastischen Homopolymer oder Copolymer vermischt ist.

5. Heißschrumpfbare Folie nach Anspruch 1, wobei das andere thermoplastische Homopolymer oder Copolymer ein Copolymer aus Ethylen und einem zweiten Comonomer ist, gewählt aus der Gruppe, bestehend aus Vinlyacetat, Alkylacrylat, Kohlenmonoxid, Butadien, Styrol, Acrylsäure, Methacrylsäure, einem metallneutralisierten Salz einer Acrylsäure und einem α-Olefin.

6. Heißschrumpfbare Folie nach Anspruch 1, wobei das homogene, verzweigte Copolymer eine Dichte von etwa 0,90 g/cm³ aufweist.

7. Heißschrumpfbare, schlagzähe Mehrschichtfolie der allgemeinen Struktur:
Versiegelung/Kern/Sperre/Kern/Missbrauch
wobei jede der Kernschichten das gleiche homogene, langkettig verzweigte "single-site"-katalysierte Copolymer aus Ethylen und einem α-Olefin mit 4 bis 10 Kohlenstoffatomen umfasst, wobei das Copolymer eine Dichte von etwa 0,89 g/cm³ bis etwa 0,91 g/cm³ aufweist, und die Folie hergestellt worden ist durch ein Extrusionsverfahren, anschließendes Abkühlen der Folie bis zum festen Zustand, erneutes Erhitzen der Folie bis zum Erweichungspunkt, Recken der Folie in Längs- und Querrichtung und rasches Abkühlen der Folie unter Beibehaltung ihrer gereckten Ausmaße, um die Folie in der orientierten molekularen Konfiguration fest werden zu lassen.

8. Heißschrumpfbare Folie nach Anspruch 7, wobei das α-Olefin mit 4 bis 10 Kohlenstoffatomen Okten ist.

9. Heißschrumpfbare Folie nach Anspruch 7, wobei das homogene, verzweigte Copolymer mit einem anderen thermoplastischen Homopolymer oder Copolymer vermischt ist.

10. Heißschrumpfbare Folie nach Anspruch 9, wobei das andere thermoplastische Homopolymer oder Copolymer ein Copolymer aus Ethylen und einem zweiten Comonomer ist, gewählt aus der Gruppe bestehend aus Vinylacetat, Alkylacrylat, Kohlenmonoxid, Butadien, Styrol, Acrylsäure, Methacrylsäure, einem metallneutralisierten Salz einer Acrylsäure und einem α-Olefin.

11. Heißschrumpfbare Folie nach Anspruch 7, wobei das homogene, verzweigte Copolymer eine Dichte von etwa 0,90 g/cm³ aufweist.

12. Heißschrumpfbare Folie nach Anspruch 7, wobei die Sperrschicht ein Vinylidenchlorid-Copolymer umfasst.

13. Heißschrumpfbare Folie nach Anspruch 12, wobei die Sperrschicht ein Vinylidenchlorid-Methylacrylat-Copolymer umfasst.

14. Heißschrumpfbare Folie nach Anspruch 7, wobei die Versiegelungsschicht ein Copolymer aus Ethylen und einem Comonomer umfasst, gewählt aus der Gruppe, bestehend aus Vinylacetat, Alkylacrylat, Acrylsäure, Methacrylsäure, einem metallneutralisierten Salz einer Acrylsäure und einem α-Olefin.

15. Heißschrumpfbare Folie nach Anspruch 7, umfassend weiterhin zusätzliche Innenschichten, um die Zwischenschichtadhäsion zu fördern.

16. Heißschrumpfbare, schlagzähe Mehrschichtfolie, umfassend:
a) eine Versiegelungsschicht;
b) eine erste Kernschicht, umfassend ein homogenes, langkettig verzweigte Ethylen-α-Olefin-Copolymer mit einer Dichte von etwa 0,89 g/cm³ bis etwa 0,91 g/cm³;
c) eine Sperrschicht;
d) eine zweite Kernschicht, umfassend ein homogenes, langkettig verzweigtes Ethylen-α-Olefin-Copolymer mit einer Dichte von etwa 0,89 g/cm³; und
e) eine Missbrauchsschicht;
wobei das homogene, verzweigte Ethylen-α-Olefin der ersten Kernschicht sich von dem der zweiten Kernschicht unterscheidet, und die Folie hergestellt worden ist durch ein Extrusionsverfahren, anschließendes Abkühlen der Folie bis zum festen Zustand, erneutes Erhitzen der Folie bis zum Erweichungspunkt, Recken der Folie in Längs- und Querrichtung und rasches Abkühlen der Folie unter Beibehaltung ihrer gereckten Ausmaße, um die Folie in der orientierten molekularen Konfiguration fest werden zu lassen.

17. Heißschrumpfbare Folie nach Anspruch 16, umfassend weiterhin zusätzliche Innenschichten, um die Zwischenschichtadhäsion zu fördern.

18. Heißschrumpfbare, schlagzähe Mehrschichtfolie der allgemeinen Struktur:
Versiegelung/Kern/Sperre/Kern/Missbrauch
wobei jede der zwei Kernschichten das gleiche homogene Copolymer aus Ethylen und Okten mit einem I₁₀/I₂ von größer als oder gleich 5,63 und einem Mw/Mn von weniger als gleich (I₁₀/I₂)-4,63 umfasst, wobei das Copolymer eine Dichte von etwa 0,89 g/cm³ bis etwa 0,91 g/cm³ aufweist, und die Folie hergestellt worden ist durch ein Extrusionsverfahren, anschließendes Abkühlen der Folie bis zum festen Zustand, erneutes Erhitzen der Folie bis zum Erweichungspunkt, Recken der Folie in Längs- und Querrichtung und rasches Abkühlen der Folie unter Beibehaltung ihrer gereckten Ausmaße, um die Folie in der orientierten molekularen Konfiguration fest werden zu lassen.

19. Heißschrumpfbare Folie nach Anspruch 18, wobei mindestens eine der Kernschichten weiterhin ein anderes thermoplastisches Homopolymer oder Copolymer, vermischt mit dem homogenen Ethylen-Okten-Polymer, beinhaltet.

20. Heißschrumpfbare Folie nach Anspruch 19, wobei das andere thermoplastische Homopolymer oder Copolymer ein Copolymer aus Ethylen und einem zweiten Comonomer ist, gewählt aus der Gruppe, bestehend aus Vinylacetat, Alkylacrylat, Kohlenmonoxid, Butadien, Styrol, Acrylsäure, Methacrylsäure, einem metallneutralisierten Salz einer Acrylsäure und einem α-Olefin.

21. Heißschrumpfbare Folie nach Anspruch 20, umfassend weiterhin zusätzliche Innenschichten, um die Zwischenschichtadhäsion zu fördern.

22. Heißschrumpfbare, schlagzähe Mehrschichtfolie, umfassend:
a) eine Versiegelungsschicht;
b) eine erste Kernschicht, umfassend ein homogenes Ethylen-Okten-Copolymer mit einem I_{10/12} von größer als oder gleich 5,63 und einem Mw/Mn von weniger als oder gleich (I₁₀/I₂)-4,63, und das eine Dichte von etwa 0,89 g/cm³ bis etwa 0,91 g/cm³ aufweist;
c) eine Sperrschicht;
d) eine zweite Kernschicht, umfassend ein homogenes Ethylen-Octen-Copolymer mit einem I₁₀/I₂ und größer als oder gleich 5,63 und einem Mw/Mn von weniger als oder gleich (I₁₀/I₂)-4,63, und welches eine Dichte von etwa 0,89 g/cm³ bis etwa 0,91 g/cm³ aufweist; und
e) eine Missbrauchs-Schicht,
wobei die Folie hergestellt worden ist durch ein Extrusionsverfahren, anschließendes Abkühlen der Folie bis zum festen Zustand, erneutes Erhitzen der Folie bis zum Erweichungspunkt, Recken der Folie in Längs- und Querrichtung und rasches Abkühlen der Folie unter Beibehaltung ihrer gereckten Ausmaße, um die Folie in der orientierten molekularen Konfiguration fest werden zu lassen.

23. Heißschrumpfbare Mehrschichtfolie nach Anspruch 22, wobei das homogene Ethylen-Okten-Copolymer der ersten Kernschicht sich von demjenigen der zweiten Kernschicht unterscheidet.

24. Heißschrumpfbare Folie nach Anspruch 22, umfassend weiterhin zusätzliche Innenschichten, um die Zwischenschichtadhäsion zu fördern.

25. Heißschrumpfbare Folie nach Anspruch 22, wobei das homogene Ethylen-Okten-Copolymer mindestens einer der ersten und zweiten Kernschicht mit einem anderen thermoplastischen Homopolymer oder Copolymer vermischt ist.

26. Heißschrumpfbare Folie nach Anspruch 25, wobei das andere thermoplastische Homopolymer oder Copolymer ein Copolymer aus Ethylen und einem zweiten Comonomer ist, gewählt aus der Gruppe, bestehend aus Vinylacetat, Kohlenmonoxid, Butadien, Styrol, Acrylsäure, Methacrylsäure, einem metallneutralisierten Salz einer Acrylsäure und einem α-Olefin.

## Revendications

1. Film thermorétractable multicouche résistant aux chocs comprenant au moins deux couches centrales, chacune desdites couches centrales comprenant un copolymère homogène catalysé par un catalyseur à site unique d'éthylène et d'une alpha-oléfine comportant de quatre à dix atomes de carbone et ayant une ramification à longue chaîne, ledit copolymère ayant une densité d'environ 0,89 g/cm³ à environ 0,91 g/cm³, le film ayant été formé par un procédé d'extrusion suivi par le refroidissement du film jusqu'à un état solide, le réchauffement du film jusqu'à son point de ramollissement, l'étirement du film dans les directions longitudinale et transversale, et le rapide refroidissement du film tout en préservant ses dimensions étirées pour placer le film dans la configuration moléculaire orientée.

2. Film thermorétractable selon la revendication 1, dans lequel le copolymère ramifié homogène de l'une desdites deux couches centrales est identique au copolymère ramifié homogène de l'autre desdites couches.

3. Film thermorétractable selon la revendication 1, dans lequel l'alpha-oléfine comportant de quatre à dix atomes de carbone est de l'octène.

4. Film thermorétractable selon la revendication 1, dans lequel ledit copolymère ramifié homogène est mélangé à un autre homopolymère ou copolymère thermoplastique.

5. Film thermorétractable selon la revendication 1, dans lequel ledit autre homopolymère ou copolymère thermoplastique est un copolymère d'éthylène et d'un second comonomère choisi dans le groupe constitué de l'acétate de vinyle, de l'acrylate d'alkyle, du monoxyde de carbone, du butadiène, du styrène, de l'acide acrylique, de l'acide méthacrylique, d'un sel neutralisé par un métal d'un acide acrylique, et d'une alpha-oléfine.

6. Film thermorétractable selon la revendication 1, dans lequel le copolymère ramifié homogène a une densité d'environ 0,90 g/cm³ à environ 0,91 g/cm³.

7. Film thermorétractable multicouche résistant aux chocs présentant la structure générale :
couche de scellement / couche de coeur / couche barrière / couche de coeur /couche d'usure
dans lequel chacune des couches centrales comprend le même copolymère homogène ayant une ramification à longue chaîne et catalysé par un catalyseur à site unique, d'éthylène et d'une alpha-oléfine comportant de quatre à dix atomes de carbone, ledit copolymère ayant une densité d'environ 0,89 g/cm³ à environ 0,91 g/cm³, le film ayant été formé par un procédé d'extrusion suivi par le refroidissement du film jusqu'à un état solide, le réchauffement du film jusqu'à son point de ramollissement, l'étirement du film dans les directions longitudinale et transversale, et le rapide refroidissement du film tout en préservant ses dimensions étirées pour placer le film dans la configuration moléculaire orientée.

8. Film thermorétractable selon la revendication 7, dans lequel ladite alpha-oléfine comportant de quatre à dix atomes de carbone est de l'octène.

9. Film thermorétractable selon la revendication 7, dans lequel ledit copolymère homogène ramifié est mélangé à un autre homopolymère ou copolymère thermoplastique.

10. Film thermorétractable selon la revendication 9, dans lequel ledit autre homopolymère ou copolymère thermoplastique est un copolymère d'éthylène et d'un second comonomère choisi dans le groupe constitué de l'acétate de vinyle, de l'acrylate d'alkyle, du monoxyde de carbone, du butadiène, du styrène, de l'acide acrylique, de l'acide méthacrylique, d'un sel neutralisé par un métal d'un acide acrylique, et d'une alpha-oléfine.

11. Film thermorétractable selon la revendication 7, dans lequel le copolymère homogène ramifié a une densité d'environ 0,90 g/cm³ à environ 0,91 g/cm³.

12. Film thermorétractable selon la revendication 7, dans lequel la couche barrière comprend un copolymère de chlorure de vinylidène.

13. Film thermorétractable selon la revendication 12, dans lequel la couche barrière comprend un copolymère de chlorure de vinylidène-acrylate de méthyle.

14. Film thermorétractable selon la revendication 7, dans lequel la couche étanche comprend un copolymère d'éthylène et d'un comonomère choisi dans le groupe constitué de l'acétate de vinyle, de l'acrylate d'alkyle, de l'acide acrylique, de l'acide méthacrylique, d'un sel neutralisé par un métal d'un acide acrylique, et d'une alpha-oléfine.

15. Film thermorétractable selon la revendication 7, comprenant en outre des couches internes supplémentaires destinées à favoriser l'adhérence entre les couches.

16. Film thermorétractable multicouche résistant aux chocs comprenant :
a) une couche de scellement ;
b) une première couche centrale comprenant un copolymère homogène ayant une ramification à longue chaîne d'éthylène et d'une alpha-oléfine ayant une densité d'environ 0,89 g/cm³ à environ 0,91 g/cm³ ;
c) une couche barrière ;
d) une seconde couche centrale comprenant un copolymère homogène ayant une ramification à longue chaîne d'éthylène et d'une alpha-oléfine ayant une densité d'environ 0,89 g/cm³ à environ 0,91 g/cm³ ; et
e) une couche d'usure ;
dans lequel le copolymère homogène ramifié d'éthylène et d'alpha-oléfine de la première couche centrale diffère de celui de la seconde couche centrale,
le film ayant été formé par un procédé d'extrusion suivi par le refroidissement du film jusqu'à un état solide, le réchauffement du film jusqu'à son point de ramollissement, l'étirement du film dans les directions longitudinale et transversale, et le rapide refroidissement du film tout en préservant ses dimensions étirées pour placer le film dans la configuration moléculaire orientée.

17. Film thermorétractable selon la revendication 16, comprenant en outre des couches internes supplémentaires destinées à favoriser l'adhérence entre les couches.

18. Film thermorétractable multicouche résistant aux chocs présentant la structure générale :
couche de scellement / couche de coeur / couche barrière / couche de coeur /couche d'usure
dans lequel chacune des deux couches centrales comprend le même copolymère homogène d'éthylène et d'octène ayant un rapport I₁₀/I₂ supérieur ou égal à 5,63 et un rapport Mw/Mn inférieur ou égal à (I₁₀/I₂) - 4,63, ledit copolymère ayant une densité d'environ 0,89 g/cm³ à environ 0,91 g/cm³, le film ayant été formé par un procédé d'extrusion suivi par le refroidissement du film jusqu'à un état solide, le réchauffement du film jusqu'à son point de ramollissement, l'étirement du film dans les directions longitudinale et transversale, et le rapide refroidissement du film tout en préservant ses dimensions étirées pour placer le film dans la configuration moléculaire orientée.

19. Film thermorétractable selon la revendication 18, dans lequel au moins l'une desdites couches centrales comprend en outre un autre homopolymère ou copolymère thermoplastique mélangé au copolymère homogène d'éthylène et d' octène.

20. Film thermorétractable selon la revendication 19, dans lequel ledit autre homopolymère ou copolymère thermoplastique est un copolymère d'éthylène et d'un second comonomère choisi dans le groupe constitué de l'acétate de vinyle, de l'acrylate d'alkyle, du monoxyde de carbone, du butadiène, du styrène, de l'acide acrylique, de l'acide méthacrylique, d'un sel neutralisé par un métal d'un acide acrylique, et d'une alpha-oléfine.

21. Film thermorétractable selon la revendication 20, comprenant en outre des couches internes supplémentaires destinées à favoriser l'adhérence entre les couches.

22. Film thermorétractable multicouche résistant aux chocs comprenant :
a) une couche de scellement ;
b) une première couche centrale comprenant un copolymère homogène d'éthylène et d'octène ayant un rapport I₁₀/I₂ supérieur ou égal à 5,63 et un rapport Mw/Mn inférieur ou égal à (I₁₀/I₂) - 4,63 et ayant une densité d'environ 0,89 g/cm³ à environ 0,91 g/cm³ ;
c) une couche barrière ;
d) une seconde couche centrale comprenant un copolymère homogène d'éthylène et d'octène ayant un rapport I₁₀/I₂ supérieur ou égal à 5,63 et un rapport Mw/Mn inférieur ou égal à (I₁₀/I₂) - 4,63 et ayant une densité d'environ 0,89 g/cm³ à environ 0,91 g/cm³ ; et
e) une couche d'usure ;
le film ayant été formé par un procédé d'extrusion suivi par le refroidissement du film jusqu'à un état solide, le réchauffement du film jusqu'à son point de ramollissement, l'étirement du film dans les directions longitudinale et transversale, et le rapide refroidissement du film tout en préservant ses dimensions étirées pour placer le film dans la configuration moléculaire orientée.

23. Film thermorétractable selon la revendication 22, dans lequel le copolymère homogène d'éthylène et d'octène de ladite première couche centrale diffère de celui de ladite seconde couche centrale.

24. Film thermorétractable selon la revendication 22, comprenant en outre des couches internes supplémentaires destinées à favoriser l'adhérence entre les couches.

25. Film thermorétractable selon la revendication 22, dans lequel le copolymère homogène d'éthylène et d'octène d'au moins l'une desdites première et seconde couches centrales est mélangé à un autre homopolymère ou copolymère thermoplastique.

26. Film thermorétractable selon la revendication 25, dans lequel ledit autre homopolymère ou copolymère thermoplastique est un copolymère d'éthylène et d'un second comonomère choisi dans le groupe constitué de l'acétate de vinyle, de l'acrylate d'alkyle, du monoxyde de carbone, du butadiène, du styrène, de l'acide acrylique, de l'acide méthacrylique, d'un sel neutralisé par un métal d'un acide acrylique, et d'une alpha-oléfine.
